# EUROPÄISCHE PATENTSCHRIFT

(11) **EP 2 729 289 B1**
(45) Veröffentlichungstag und Bekanntmachung des Hinweises auf die Patenterteilung: **16.11.2016**
(21) Anmeldenummer: 12746016.0
(22) Anmeldetag: 09.07.2012
(51) Int. Cl.: B29C 43/14, B29C 70/08, B60R 13/02, B29C 43/18, B29L 31/30

(54) **FORMTEIL SOWIE VERFAHREN ZUR HERSTELLUNG DES FORMTEILS**
MOULDED ARTICLE AND PROCESS FOR MANUCTURING THE MOULDED ARTICLE
PIECE MOULEE ET SON PROCEDE DE FABRICATION

(30) Priorität: 07.07.2011 DE 102011106883
(43) Veröffentlichungstag der Anmeldung: 14.05.2014
(73) Patentinhaber: Faurecia Innenraum Systeme GmbH, 76767 Hagenbach (DE)
(72) Erfinder: KASTELL, Friedhelm, 57581 Katzwinkel (DE); GÜNTHER, Peter, 68623 Lampertheim (DE); REICHHOLD, Jochen, 34117 Kassel (DE)
(74) Vertreter: Schatt, Markus F.
(86) Internationale Anmeldenummer: PCT/EP2012/002892
(87) Internationale Veröffentlichungsnummer: WO 2013/004400

(56) Entgegenhaltungen:
- EP-A1- 1 593 488
- EP-A1- 1 741 567
- EP-A1- 1 815 977
- DE-A1- 2 113 740
- DE-A1-102004 045 572
- US-A- 3 141 809
- US-A- 4 034 137
- US-A- 4 385 955
- US-A- 4 716 072
- US-A- 5 817 402
- DATABASE WPI Week 201009 Thomson Scientific, London, GB; AN 2010-A87796 XP002688411, & JP 2010 012738 A (NISHIKAWA GOMU KOGYO KK) 21. Januar 2010 (2010-01-21)

## Beschreibung

Die vorliegende Erfindung betrifft ein Formteil sowie ein Verfahren zur Herstellung des Formteils.

Aus der DE 2113740 A ist ein Glasfaser-verstärkter Verbundstoff bekannt, der für die Beschichtung mit einem glänzenden Obertlächenlack vorgesehen ist.

Weiterhin offenbaren die US 5 817 402 A und die EP 1 593 488 ein Formteil. Aus der EP 1 741 567 A und der US 4 385 955 A ist jeweils ein Verfahren zur Herstellung eines Formteils bekannt.

Im Innenraum von Fahrzeugen wird eine Vielzahl von Formteilen eingesetzt, beispielsweise Türseitenteile, Dachhimmel, Armaturenbretter oder Instrumententafeln. Der Träger des Formteils ist aus Kunststoff oder vorzugweise aus einem Faserformstoff gefertigt, flächenhaft ausgebildet und weist eine im Wesentlichen plane oder durch das jeweilige Design vorgegebene dreidimensionale Kontur mit konvexen und konkaven Bereichen auf, sowie gegebenenfalls einen oder mehrere Durchbrüche und Aussparungen für Zierleisten und Bedienelemente wie Taster, Schalter und Drehknöpfe für Fensterheber und Außenspiegel. Zur Fixierung der Formteile in der Fahrgastzelle oder an einer Fahrzeugtür sowie zur Halterung von Handgriffen, Bedienelementen und Ablageschalen an dem Formteil ist das Formteil zudem mit Anbauteilen ausgestattet, die in Fachkreisen auch als Retainer bezeichnet werden.

Der Träger besteht in der Regel aus Kunststoffen oder kunststoffhaltigen Verbundwerkstoffen, wie Acrylnitril-Butadien-Styrol (ABS), Polypropylen (PP). Ebenso werden als Werkstoff für den Träger Faserformstoffe auf Basis textiler Flächengebilde aus Hanf, Sisal, Flachs, Kenaf und/oder Holzbestandteilen, wie Holzfasern, Holzmehl, Holzspäne oder Papier, gebunden mit duroplastischen Bindemitteln verwendet. Als weiterer Werkstoff für den Träger kommen geschäumte Materialien aus Polyurethan oder Epoxidharzen, die gegebenenfalls natur- oder glasfaserverstärkt sind, in Betracht.

Die dem Fahrzeuginnenraum zugewandten Seite des Formteils bzw. des Trägers wird üblicherweise als Sichtseite bezeichnet. Um der Sichtseite ein attraktives Aussehen zu geben, wird der Träger mit einem oder mehreren Dekorteilen aus einem textilen Material oder einer Kunststofffolie ausgestattet. Die hierzu verwendeten Kunststofffolien sind zumeist gefärbt und weisen eine reliefartig geprägte Oberfläche auf. Gegebenenfalls umfassen die Dekorteile eine Polsterlage aus einem geschäumten Kunststoff, die dem Träger zugewandt ist und dem Formteil eine ansprechende weiche Haptik verleiht. Die Dekorteile werden üblicherweise auf den Träger laminiert oder bei der Herstellung des Trägers mittels thermoplastischem Hinterspritzen mit diesem verklebt.

Zweckmäßig ist der Träger randseitig und/oder an einer der Sichtseite gegenüberliegenden Montageseite mit Vorsprüngen, Vertiefungen und Bohrungen ausgestattet. Die Vorsprünge, Vertiefungen und Bohrungen dienen zur kraftschlüssigen Verbindung des Formteils mit Teilen der Karosserie, wie einer Autotür oder dem Dach einer Fahrgastzelle mittels Halteelementen, wie Klammern, Stiften und Schrauben.

Die Anbauteile bzw. Retainer sind aus Kunststoff oder einem metallischen Werkstoff, wie Stahlblech gefertigt und mechanisch mit dem Träger verbunden mittels Halteelementen, wie Stiften, Schrauben, Klammern oder durch Verschränkung, Verkrallung oder Klemmung. Zweckmäßig umfassen Retainer als integralen Bestandteil Krallen und/oder Laschen. Die Krallen und Laschen sind dazu vorgesehen, bei der Montage der Retainer in Ausnehmungen des Trägers einzugreifen bzw. um den Rand des Trägers gebogen und durch Klemmung fixiert zu werden.

Für die Herstellung von Formteilen für die Innenausstattung von Fahrzeugen sind verschiedene Verfahren bekannt, die in der Regel zwei oder mehr Fertigungsschritte umfassen.

Gemäß einem bekannten Verfahren wird zunächst mittels Heißverpressen aus einem Faserformstoff ein Träger erzeugt. Nachfolgend werden auf der Montageseite des Trägers Retainer z.B. durch Reibschweißen oder Kleben angebracht. In einem dritten Schritt werden auf die Sichtseite des Trägers ein oder mehrere Dekorteile laminiert. In einer vereinfachten, zweistufigen Variante des Verfahrens werden Retainer aus einem metallischen Werkstoff mit integrierten Halteelementen, insbesondere mit Krallen gemeinsam mit dem Faserformstoff verpresst, wobei die Halteelemente in den Faserformstoff eindringen und nach dessen Aushärtung die Retainer kraftschlüssig an dem Träger verankern.

Nach einem anderen bekannten Verfahren wird ein Träger mittels Spritzguss, insbesondere mittels Hinterspritrguss aus einem thermoplastischen Kunststoff hergestellt. Bevorzugt werden ein oder mehrere Dekorteile in einer Hinterspritzgussform angeordnet und mit dem thermisch plastifizierten Kunststoff hinterspritzt. Nach dem Abkühlen und Erstarren der Kunststoffschmelze sind die Dekorteile kraftschlüssig mit dem Träger verklebt. In einem weiteren Schritt werden Anbauteile bzw. Retainer auf der Montageseite des Trägers montiert.

Träger aus Faserformstoff werden in stetig zunehmendem Umfang für die Innenausstattung von Fahrzeugen verwendet. Gegenüber Kunststoffen weisen Faserformstoffe einige Vorteile auf. So werden Faserformstoffe zu einem erheblichen Anteil aus emeuerbaren Ressourcen, wie Nadelbäumen, Hanf oder Kenaf erzeugt. Auch technische und ökonomische Erwägungen verstärken den Trend zu Faserformstoffen. Faserformstoffe haben ein geringeres Gewicht bei gleicher spezifischer Steifigkeit wie Glasfaser-Polypropylen-Verbundwerkstoffe oder Talkum-Polypropylen-Verbundwerkstoffe. Träger aus Faserformstoff zeichnen sich aus durch ihr günstiges Crash- und Splitterverhalten, gute Energie- und Schallabsorption (auch bei Kälte) und einen vergleichsweise geringen Wärmeausdehnungskoeffizienten. Die Industrie verfügt über langjährige Erfahrung mit der Verarbeitung von Faserformstoff, wobei die zugehörigen Prozesse und Heißpressformen robust bzw. kostengünstig sind im Vergleich zu Spritzgusswerkzeugen. Faserformstoffe gestatten die Herstellung von Trägern mit stark ausgeprägten Hinterschnitten und Umlenkungen mit einem Winkel von bis zu 180 Grad. Schließlich sind Holz- und Naturfasern in großen Mengen verfügbar, wobei ihr Preis im Vergleich zu erdölbasierten Kunststoffen in geringerem Maß vom Rohölpreis abhängig ist.

Ein Beispiel für eine Oberflächentextur offenbart die WO 2010/080967 A1, wonach ein Innenverkleidungsteil aus Faserformstoff mit einer glatten, transparenten, flüssigkeitsundurchlässigen, kratz- und UV-resistenten Beschichtung aus einem Werkstoff, vorzugsweise einem thermoplastischen Polymer, mit einer Schmelztemperatur im Bereich von 60 bis 170 °C ausgestattet ist. Die Beschichtung wird mittels Heißpressen aufgebracht, wobei der Werkstoff der Beschichtung teilweise in den Faserformstoff einsinkt, so dass die Beschichtung kraftschlüssig mit dem Faserformstoff verbunden ist.

Die Erfindung hat die Aufgabe, ein Formteil und insbesondere ein Verkleidungsteil bereit zu stellen, das an seiner sichtseitigen Oberfläche eine holzartige Haptik aufweist oder bewirkt, für eine qualitativ hochwertige Oberflächenoptik geeignet ist und beim Gebrauch beständig ist.

Auch ist Aufgabe der Erfindung ein effizientes Verfahren zur Herstellung eines derartigen Formteils bereitzustellen.

Diese Aufgabe wird gelöst durch den jeweiligen unabhängigen Anspruch. Weitere Ausführungsformen sind in den auf diese jeweils rückbezogenen Unteransprüchen angegeben.

Das erfindungsgemäße Formteil ist insbesondere ein Verkleidungsteil mit einer sichtseitigen Oberfläche, das einem Innenraum zugewandt ist. Das Formteil ist zur Anbringung an ein Rahmenbauteil vorgesehen, wobei das Formteil oder Verkleidungsteil eine entgegen gesetzt zur sichtseitigen Oberfläche gelegene Rückseite aufweist, das bei seinem bestimmungsgemäßen Einbau dem Rahmenbauteil zugewandt ist, während die sichtseitige Oberfläche dem Innenraum des Fahrzeugs zugewandt ist.

Das Formteil kann insbesondere ein Innenverkleidungsteil wie ein Seitentür-Verkleidungsteil oder eine Instrumententafel oder Armaturenbrett sein. Diese sind zur Anbringung an ein Rahmenbauteil des Fahrzeugs vorgesehen. Das Formteil nach der Erfindung bietet eine besondere Haptik, d.h. den Effekt einer besonderen taktilen Wahrnehmung beim Berühren der Oberfläche. Im Gegensatz zur visuellen und akustischen Wahrnehmung ist die menschliche Haptik bisher nur in einem geringen Umfang erforscht. Die biomechanischen und neurologischen Prozesse auf denen die haptische Wahrnehmung beruht, sind äußerst komplex und nur zu einem geringen Teil verstanden. Feine Oberflächentexturen können nicht durch Berührung mit statischem Druck der Fingerspitzen wahrgenommen werden. Vielmehr ist dies nur mittels dynamischer Untersuchung möglich, wobei die Fingerspitzen über die Oberfläche streichen und die Haut der Fingerspitzen zeitabhängig in komplexer Weise mechanisch verformt wird. Die dynamischen Hautverformungen werden von den in der Epidermis und Dermis eingebetteten und auf mechanische Einwirkung ansprechenden Nervenzellen in zeitlich variierende (transiente) Signale umgewandelt, die über die Nervenbahnen zum zentralen Nervensystem gelangen und dort analysiert werden. Basierend auf der Analyse der transienten Signale wird die Oberflächentextur vom zentralen Nervensystem klassifiziert. Lamotte und Whitehouse haben die menschliche Haptik untersucht und in ihren Experimenten gefunden, dass die Detektionsschwelle für oberflächliche Höhenunterschiede etwa 1 µm beträgt für einen auf einer glatten Oberfläche angeordneten Punkt mit einem Durchmesser von 600 µm. Um einen Punkt mit einem Durchmesser von 40 µm wahrnehmen zu können, muss die Höhe des Punktes mindestens 6 µm betragen. In weiteren Experimenten konnte gezeigt werden, dass menschliche Probanden Punkte mit einer Höhe von 3 µm wahrnehmen können, wenn die Fingerspitzen mit einer Geschwindigkeit von etwa 10 mm/s über die Oberfläche streichen.

Die Erfindung schlägt gemäß einem ersten Aspekt ein Formteil vor, aufweisend oder umfassend einen Träger aus Faserformstoff und eine Beschichtung aus wenigstens einem polymeren Werkstoff oder polymeren Werkstoffen, wobei die Oberfläche der Beschichtung zumindest bereichsweise einen arithmetischen Mittenrauwert Ra im Bereich von 10 bis 80 µm hat, wie im Anspruch 1 angegeben.

Der Träger oder die Trägerschicht ist aus heiß verpresstem Faserformstoff gebildet oder besteht aus diesem.

Nach einer speziellen Ausführungsform des erfindungsgemäßen Formteils ist vorgesehen, dass die Oberfläche der Beschichtung zumindest bereichsweise einen arithmetische Mittenrauwert Ra im Bereich von 20 bis 80 µm hat.

Nach einer Ausführungsform des erfindungsgemäßen Formteils ist vorgesehen, dass die Beschichtung eine erste, oberflächliche Beschichtungszone und eine zweite, kraftschlüssig verbindende Beschichtungszone aufweist. Die Beschichtung kann ein- oder mehrlagig sein.

Nach einer Ausführungsform des erfindungsgemäßen Formteils ist vorgesehen, dass der arithmetische Mittenrauwert Ra im Bereich von 10 bis 50 µm oder im Bereich von 20 bis 40 µm liegt.

Nach einer Ausführungsform des erfindungsgemäßen Formteils ist vorgesehen, dass
- die Beschichtung eine erste, oberflächliche Beschichtungszone und eine zweite, kraftschlüssig verbindende Beschichtungszone aufweist oder umfasst;
- die erste Beschichtungszone wenigstens einen der polymeren Werkstoffe enthält oder aus wenigstens einem der polymeren Werkstoffe besteht und sie eine Dicke im Bereich von 10 bis 200 µm oder im Bereich von 10 bis 60 µm oder im Bereich von 10 bis 30 µm hat;
- die zweite Beschichtungszone wenigstens einen der polymeren Werkstoffe enthält oder aus wenigstens einem der polymeren Werkstoffe und Faserformstoff besteht und sie eine Dicke im Bereich von 10 bis 200 µm oder im Bereich von 20 bis 100 µm oder im Bereich von 20 bis 50 µm hat.

Dieses Formteil ermöglicht zum Einen auf Grund der Dicken der zwei Beschichtungszonen, dass die Oberfläche der ersten Beschichtungszone, die zugleich die Oberfläche der Beschichtung bildet, eine Topografie aufweist, die im Wesentlichen konform zur Oberfläche des Faserformstoffs ist. Diese Topografie ist im Wesentlichen durch die Form und die mehr oder minder zufällige Anordnung der Fasern des Faserformstoffs geprägt und weist die erfindungsgemäße Rauheit auf, sodass diese Oberfläche holzartig ist und die gewünschte holzartige Haptik vermittelt. Außerdem fungiert die erste Beschichtungszone als Versiegelung, die den Faserformstoff bzw. das Formteil vor schädigenden Einwirkungen, wie Kratzern oder Flüssigkeiten schützt. Diese vorteilhafte Topografie kann überraschenderweise mit Presswerkzeugen erzielt werden, die auf ihren die Oberfläche der Beschichtung zu berührenden Pressflächen keine dementsprechende holzartige Narbung oder dergleichen haben.

Dieses Formteil ermöglicht zum Anderen auf Grund der Dicke der zweiten Beschichtungszone, dass in der zweiten Beschichtungszone wenigstens einer der polymeren Werkstoffe in den Faserformstoff eingedrungen ist, sodass diese zweite Beschichtungszone eine dauerhaft kraftschlüssige Verankerung der Beschichtung an dem Faserformstoff gewährleistet.

Nach einer Ausführungsform des erfindungsgemäßen Formteils ist vorgesehen, dass:
- ein erster polymerer Werkstoff des wenigstens einen polymeren Werkstoffs ein thermoplastisches Matrixpolymer mit einer ersten Schmelztemperatur enthält;
- ein zweiter polymerer Werkstoff des wenigstens einen polymeren Werkstoffs ein thermoplastisches Matrixpolymer mit einer zweiten Schmelztemperatur enthält;
- die erste Schmelztemperatur um mehr als 5 °C oder um mehr als 10 °C oder um mehr als 20 °C oder um mehr als 30 °C höher als die zweite Schmelztemperatur ist.

Nach einer Ausführungsform des erfindungsgemäßen Formteils ist vorgesehen, dass
- der Träger mit einer Folie beschichtet ist, die eine erste Folienschicht aus dem ersten polymeren Werkstoff und eine zweite Folienschicht aus dem zweiten polymeren Werkstoff aufweist;
- die zweite Folienschicht dem Träger zugewandt ist.

Nach einer Ausführungsform des Formteils ist vorgesehen, dass der Träger mit einer wenigstens eine Lage aufweisenden Folie aus wenigstens einem der polymeren Werkstoffe mit einer Gesamtdicke im Bereich von 40 bis 1000 µm oder im Bereich von 60 bis 200 µm oder im Bereich von 80 bis 120 µm beschichtet ist.

Nach einer Ausführungsform des erfindungsgemäßen Formteils ist vorgesehen, dass
- jeder des wenigstens einen polymeren Werkstoffs oder der mindestens eine polymere Werkstoff der Beschichtung ein Matrixpolymer und gegebenenfalls Additive, wie Farbpigmente und UV-Stabilisatoren enthält oder aus einem Matrixpolymer und gegebenenfalls aus Additiven, wie Farbpigmenten und UV-Stabilisatoren besteht;
- das Matrixpolymer gewählt ist aus Polyolefinen, Polyester, Polypropylen, Polyamid oder Mischungen davon und der Anteil an Additiven bezogen auf den polymeren Werkstoff 0 bis 15 Gew.-% beträgt.

Nach einer Ausführungsform des erfindungsgemäßen Formteils ist vorgesehen, dass der Faserformstoff synthetische Fasern und/oder Naturfasern aufweist.

Nach einer Ausführungsform des erfindungsgemäßen Formteils ist vorgesehen, dass das Formteil zusätzlich aufweist wenigstens ein Anbauteil aus Kunststoff und/oder einem metallischen Werkstoff, wie Stahlblech, das jeweils mit dem Träger kraftschlüssig verbunden ist. Insbesondere sind die Anbauteile mittels Halteelementen, wie Stiften, Schrauben, Klammern oder durch Verschränkung, Verdrallung oder Klemmung oder durch Klebmittel mit dem Träger verbunden.

Bei dem erfindungsgemäßen Formteils ist vorgesehen, dass die Topografie der Oberfläche im Wesentlichen konform zur Oberfläche des Faserformstoffs ist.

Bei dem erfindungsgemäßen Formteil ist vorgesehen, dass der wenigstens eine polymere Werkstoff teilweise im Faserformstoff eingedrungen ist und die Topografie der Oberfläche im Wesentlichen durch die Form und die mehr oder minder zufällige Anordnung der Fasern des Faserformstoffs geprägt ist.

Nach einer Ausführungsform des erfindungsgemäßen Formteils ist vorgesehen, dass die Oberfläche holzartig ist und/oder eine holzartige Haptik aufweist.

Vorteilhafte Weiterbildungen des erfindungsgemäßen Formteils zeichnen sich dadurch aus, dass:
- die Oberfläche der Beschichtung eine Topografie aufweist mit einem arithmetischen Mittenrauwert Ra im Bereich von 10 bis 50 µm und vorzugsweise 20 bis 40 µm;
- die Beschichtung eine erste, oberflächliche Beschichtungszone und eine zweite, kraftschlüssig verbindende Beschichtungszone umfasst, wobei die erste Beschichtungszone aus einem oder mehreren polymeren Werkstoffen besteht und eine Dicke D1 von 10 bis 200 µm, vorzugsweise 10 bis 60 µm und insbesondere 10 bis 30 µm hat, und die zweite Beschichtungszone aus einem oder mehreren polymeren Werkstoffen und Faserformstoff besteht und eine Dicke D2 von 10 bis 200 µm, vorzugsweise 20 bis 100 µm und insbesondere 20 bis 50 µm hat;
- der Träger mit einer ein-, zwei- oder mehrlagigen Folie aus einem oder mehreren polymeren Werkstoffen mit einer Gesamtdicke von 40 bis 1000 µm, vorzugsweise 60 bis 200 µm und insbesondere 80 bis 120 µm beschichtet ist;
- der mindestens eine polymere Werkstoff der Beschichtung aus einem Matrixpolymer und gegebenenfalls aus Additiven, wie Farbpigmenten und UV-Stabilisatoren besteht, wobei das Matrixpolymer gewählt ist aus Polyolefinen, Polyester, Polypropylen, Polyamid oder Mischungen davon und der Anteil an Additiven bezogen auf den polymeren Werkstoff 0 bis 15 Gew.-% beträgt;
- der Faserformstoff synthetische Fasern, insbesondere Carbonfasern, Fasern aus Polyester, Acryl, Aramid, Twaron, Kevlar, Technora, Vinalon, Zylon und/oder Polypropylen enthält;
- der Faserformstoff, jeweils bezogen auf sein Gesamtgewicht 30 bis 70 Gew.-% Naturfasern, 70 bis 30 Gew.-% Fasern aus einem oder mehreren thermoplastischen Polymeren, insbesondere Fasern aus Polypropylen, und gegebenenfalls Additive, wie Füllstoffe, Farbstoffe, UV-Stabilisatoren und/oder synthetische Fasern enthält, wobei der Anteil der optionalen Additive 0,5 bis 15 Gew.-% beträgt;
- der Faserformstoff Naturfasern, insbesondere Fasern aus Holz, Kenaf, Hanf, Jute, Flachs, Chinagras (Boehmeria nivea), Rattan, Soja, Okra (Abelmoschus esculentus), Banane, Bambus, Kokosnuss, Kokosbast, Baumwolle, Curaua (Ananas lucidus), Abaca (Musa textilis), Kiefer, Ananas, Bastpalme (Raphia farinifera) und/oder Sisal umfasst;
- das Formteil ein oder mehrere Anbauteile aus Kunststoff umfasst, die mit dem Träger kraftschlüssig verbunden sind; und/oder
- die Anbauteile mittels Halteelementen, wie Stiften, Schrauben, Klammern oder durch Verschränkung, Verkrallung oder Klemmung oder durch Klebmittel mit dem Träger verbunden sind.

Nach einer alternativen Ausführungsform des erfindungsgemäßen Formteils ist vorgesehen, dass der Faserformstoff, jeweils bezogen auf sein Gesamtgewicht 60 bis 80 Gew.-% Naturfasern, 15 bis 30 Gew.-% synthetische Fasern und 5 bis 15 Gew.-% thermo- oder duroplastisches Bindemittel enthält, wobei das Bindemittel vorzugsweise Acrylate umfasst.

Der Träger des Formteils hat eine Dicke von 1,5 bis 4,0 mm, vorzugsweise 1,8 bis 3,0 mm.

Die Topografie bzw. die Rauheit der Oberfläche der erfindungsgemäß beschichteten Formteile wird mittels eines taktilen Profilometers bestimmt, beispielsweise mit einem Instrument des Typs "Hommel-Etamic T8000 R" von der Firma Jenoptik oder "Surftest SV-3100" der Firma Mitutoyo.

Die Messung erfolgt gemäß den Normen DIN EN ISO 4287:1998 und DIN EN ISO 11562:1998. Hierbei wird eine Tastspitze mit einem Radius von kleiner 5 µm verwendet. Bei jeder Rauheitsmessung wird eine Taststrecke Lt inklusive Vor- und Nachlaufstrecke von größer 15 mm abgetastet. Für die Grenzwellenlänge AC des Tiefpassfilters für die Trennung von Rauheit und Welligkeit gemäß DIN EN ISO 11562:1998 wird ein Wert von λC = 2,5 mm eingesetzt; somit hat auch die Länge der Einzelmessstrecken Ir den Wert Ir = 2,5 mm (Ir = λC).

Im Rahmen der Erfindung bezeichnet der Begriff Faserformstoff ein textiles Flächengebilde, d.h. insbesondere ein Gewebe, Gewirke oder Vlies, welches Fasern, Schnitzel, Späne oder Mischungen davon umfasst. Ein Beispiel für einen Faserformstoff sind nass- oder luftgelegte bzw. gekrempelte Vliese. Die Vliese können natürliche oder synthetischen Fasern oder Mischungen von natürlichen und synthetischen Fasern enthalten sowie Späne oder Schnitzel aus Holz. Als Naturfasern kommen beispielsweise Fruchtfasem, Samenfasem und Stängelfasern wie Sisal, Jute, Hanf, Kenaf, Flachs, Cellulose und Baumwolle sowie Bananenfasern und Wolle in Betracht. Im Weiteren sind synthetische Fasern aus Polyester, Polyacrylnitril, Polyamid, Kohlenstoff, Polyvinylchlorid, Polyolefinen, wie Polyethylen und Polypropylen sowie anorganischen Materialien wie Aramid und Glas vorgesehen.

In einer vorteilhaften Ausführungsform der Erfindung umfasst der Faserformstoff, jeweils bezogen auf sein Gesamtgewicht 30 bis 70 Gew.-% Naturfasern und 70 bis 30 Gew.-% Fasern aus einem oder mehreren thermoplastischen Polymeren, insbesondere Fasern aus Polypropylen und/oder Propylen-Copolymeren, sowie gegebenenfalls Additive, wie Bindemittel, Füllstoffe und/oder Farbstoffe, wobei der Anteil der optionalen Additive 0,5 bis 15 Gew.%, bezogen auf das Gesamtgewicht des Faserformstoffs beträgt. In dieser Ausführungsform dienen die Fasern aus einem oder mehreren thermoplastischen Polymeren als Bindemittel, das beim Heißverpressen des Faserformstoffs plastifiziert wird und beim Abkühlen erstarrt und die natürlichen Fasern miteinander verklebt bzw. eine feste Matrix bildet, in welche die Naturfasern eingebettet sind. Vorzugsweise umfasst der Faserformstoff, jeweils bezogen auf sein Gesamtgewicht 40 bis 60 Gew.-% Naturfasern und 60 bis 40 Gew.-% Fasern aus einem oder mehreren thermoplastischen Polymeren. Der Faserformstoff wird in ähnlicher Weise, wie vorstehend beschrieben, hergestellt, wobei die Naturfasern und die Fasern aus einem oder mehreren thermoplastischen Polymeren zunächst miteinander vermengt und ggf. auf ein dünnes Unterlage- bzw. Transportvlies aufgelegt werden. Die Vermengung der Fasern erfolgt vorzugsweise in einem turbulenten Luftstrom bzw. in einer Verwirbelungsvorrichtung. Hieran anschließend wird das Fasergemenge mechanisch zu einer Bahn verdichtet, ggf. orientiert und mittels einer Schneidvorrichtung konfektioniert. In einer vorteilhaften Weiterbildung der vorstehenden Ausführungsform der Erfindung enthält der Faserformstoff neben Naturfasern und Fasern aus einem oder mehreren thermoplastischen Polymeren weitere synthetische Fasern, insbesondere Carbonfasern, Fasern aus Polyester, Acryl, Aramid, Twaron, Kevlar, Technora, Vinalon, Zylon.

Im Rahmen der vorliegenden Erfindung umfasst der Begriff "Polymere" sowohl Homopolymere als auch Copolymere der genannten Polymersorten.

Die mattenartigen Faserformstoffe haben eine Dicke von 5 bis 30 mm, vorzugsweise 10 bis 20 mm und ein Flächengewicht von 80 bis 4000 g/m2, vorzugsweise von 500 bis 2500 g/m2, und insbesondere von 1200 bis 2200 g/m2.

Zweckmäßig umfasst das erfindungsgemäße Formteil zudem Anbauteile bzw. Retainer. Die Anbauteile sind aus einem polymeren Werkstoff und vorzugsweise aus einem thermoplastischen Kunststoff mit einer Erweichungstemperatur von 140 bis 180 °C gefertigt. Insbesondere sind für die Anbauteile Werkstoffe, wie Polypropylen (nachfolgend mit PP bezeichnet), Acrylnitril-Butadien-Styrol (nachfolgend mit ABS bezeichnet), sowie Blends aus Acrylnitril-Butadien-Styrol und Polycarbonat (nachfolgend mit PC bezeichnet), vorgesehen.

Im Weiteren können die erfindungsgemäßen Formteile ein oder mehrere textile Dekorteile umfassen. Die Dekorteile sind als flächige textilartige Matte ausgebildet und umfassen mindestens eine dekorative Schicht, die im Folgenden als Sichtlage bezeichnet ist, sowie gegebenenfalls weitere funktionelle Schichten, insbesondere eine Polsterlage und/oder eine Schicht aus einem zweiten Schmelzklebstoff.

Bevorzugt besteht die Sichtlage aus einem Gewirke oder Gewebe aus natürlichen oder synthetischen Fasern oder Mischungen davon. Insbesondere handelt es sich bei der Sichtlage um eine Lage aus Teppich, Velours, bedruckter Folie, Folie aus thermoplastischen Polyolefinen (TPO-Folie), Polyvinylchlorid-Folie (PVC-Folie), PolyesterFolie (PET-Folie), Leder oder Kunstleder. Insbesondere besteht die Sichtlage aus einem Faservlies aus Polypropylen (PP) oder einem Gemisch aus Polypropylen und Polyethersulfon (PES). Für die Sichtlage gegebenenfalls verwendete Polymere sind gewählt aus der Gruppe umfassend Polyester, Polyethylen, Polyterephthalat, Polyacetat, Polyolefin, wie Polypropylen oder Polyvinylchlorid, oder Copolymere der vorstehenden Materialien.

Die optionale Polsterlage ist aus einem elastischen Material gefertigt, das vorzugsweise gewählt ist aus der Gruppe umfassend natürliche und synthetische Elastomere, geschäumte Polymere, Vliesstoffe aus natürlichen oder synthetischen Fasern oder Mischungen davon, sowie Abstandsgewirke aus synthetischen Filamenten.

In einer weiteren Ausführungsform umfasst das Dekorteil zudem eine Isolierlage, die benachbart zur Polsterlage und gegenüberliegend der Sichtlage angeordnet ist. Die Isolierlage hat die Aufgabe das Material der Polsterlage vor thermischer Schädigung beim Heißpressen des Faserformstoffs zu schützen. Vorzugsweise ist die Isolierlage aus einem Vliesstoff aus natürlichen oder synthetischen Fasern oder Mischungen davon gefertigt.

Zweckmäßig sind die Sichtlage, die optionale Polsterlage und die optionale Isolierlage punktuell, linienförmig oder flächig miteinander verbunden durch Kleben, Vernähen oder Laminieren.

In vorteilhaften Weiterbildungen der Erfindung werden die Anbauteile und die Dekorteile mittels eines ersten Schmelzklebstoffs bzw. mittels eines zweiten Schmelzklebstoffs kraftschlüssig mit dem Träger verbunden, wobei der erste und zweite Schmelzklebstoff voneinander verschieden sein können. Schmelzklebstoffe basieren auf thermoplastischen Polymeren. Bei ihrer Anwendung bzw. Applikation müssen sie auf eine Temperatur im Bereich von etwa 50 °C über der Erweichungstemperatur des thermoplastischen Basispolymers erwärmt werden. Durch die Erwärmung wird die Viskosität des thermoplastischen Basispolymers derart reduziert, dass es die zu verklebenden Fügeflächen benetzt und gegebenenfalls in Poren und Vertiefungen in den Fügeflächen eindringt.

Die thermoplastischen Basispolymere für den ersten und zweiten Schmelzklebstoff sind insbesondere gewählt aus der nachfolgenden Liste:

| Thermoplastisches Basispolymer | Applikations- / Erweichungstemperatur |
|---|---|
| Polyethylen (PE) | 140 bis 200 °C |
| amorphe Polyalphaolefine (APAO) | um 170 °C |
| Ethylenvinylacetat-Copolymere (EVAC) | um 150 °C |
| Polyester-Elastomere (TPE-E) | 65 bis 150 °C |
| Copolyamid-Elastomere (TPA-E) | um 130 °C |
| Vinylpyrrolidon/Vinylacetat-Copolymere (wasserlöslich) | um 130 °C |

Der erste und zweite Schmelzklebstoff können unabhängig voneinander eines oder mehrere der vorstehenden Basispolymere enthalten.

In zweckmäßigen Ausführungsformen der Erfindungen sind der erste und/oder der zweite Schmelzklebstoff als reaktiver Schmelzklebstoff ausgebildet. Vorzugsweise basieren die erfindungsgemäß vorgesehenen reaktiven Schmelzklebstoffe auf Polyurethanen, die mit Isocyanatgruppen ausgestattet sind. Unter der Einwirkung von Luftfeuchtigkeit und insbesondere von Wasserdampf, der beim heißen Verpressen des Faserformstoffs aufgrund der Restfeuchte der Naturfasern erzeugt wird, bewirken die Isocyanatgruppen eine Vernetzung der Polyurethan-Molekülketten. Da die Vernetzung der Polyurethan-Molekülketten durch erneutes Erwärmen nicht gelöst wird, werden reaktive Schmelzklebstoffe auf Basis von Polyurethan auch als duroplastische Schmelzklebstoffe bezeichnet.

Nach einem weiteren Aspekt der Erfindung ist ein Verfahren zur Herstellung eines Formteils vorgesehen, aufweisend die Schritte:
- Aufbringen zumindest eines polymeren Werkstoffs in Form von Dispersionen, Pulvern, Granulaten oder einer wenigstens eine Lage aufweisenden Folie (40) auf mindestens eine Oberfläche eines Faserformstoffs (50);
- Verpressen des Faserformstoffs (50) und der polymeren Werkstoffe (34, 35) mit einem ersten temperierbaren Presswerkzeug (81) bei Temperaturen im Bereich von 160 bis 230 °C zu einem Rohling (90);
- Verpressen des erhaltenen Rohlings (90) mit einem zweiten Presswerkzeug (82) bei Temperaturen im Bereich von 20 bis 140 °C zu einem Formteil (10),
   wobei der wenigstens eine polymere Werkstoff teilweise in den Faserformstoff eindringt und die Oberfläche der Beschichtung durch die Form und die mehr oder minder zufällige Anordnung der Fasern des Faserformstoffs geprägt ist und
   wobei die Oberfläche der Beschichtung zumindest bereichsweise einen arithmetischen Mittenrauwert Ra im Bereich von 10 µm bis 80 µm hat.

Nach einer Ausführungsform des erfindungsgemäßen Verfahrens ist vorgesehen, dass in Schritt (f) die Temperaturen im Bereich von 160 bis 220 °C oder im Bereich von 180 bis 220 °C liegen.

Nach einer Ausführungsform des erfindungsgemäßen Verfahrens ist vorgesehen, dass in Schritt (g) die Temperaturen im Bereich von 80 bis 120 °C oder im Bereich von 90 bis 110 °C liegen.

Nach einer Ausführungsform des erfindungsgemäßen Verfahrens ist vorgesehen, dass in Schritt (f) aus wenigstens einem der polymeren Werkstoffe eine erste, oberflächliche Beschichtungszone erzeugt wird, die eine Dicke D1 im Bereich von 10 bis 200 µm oder im Bereich von 10 bis 60 µm oder im Bereich von 10 bis 30 µm hat;
Auch ist einer Ausführungsform des erfindungsgemäßen Verfahrens vorgesehen, dass in Schritt (f) aus wenigstens einem der polymeren Werkstoffe und Faserformstoff eine zweite, kraftschlüssig verbindende Beschichtungszone erzeugt wird, die eine Dicke D2 im Bereich von 10 bis 200 µm oder im Bereich von 20 bis 100 µm oder im Bereich von 20 bis 50 µm hat.

Dieses Verfahren ermöglicht durch entsprechende Wahl der Werkstoffe und auf Grund der Dicken der zwei Beschichtungszonen eine präzise Steuerung sowohl der Eindringtiefe des zweiten Werkstoffs in den Faserformstoff als auch der Anschmiegung des ersten Werkstoffs an die Oberfläche des Faserformstoffs.

Ein Verfahren zur Herstellung des erfindungsgemäßen Formteils umfasst oder weist die folgenden Schritte auf:
(a) Bereitstellen eines mattenförmigen Faserformstoffs;
(b) Bereitstellen wenigstens eines polymeren Werkstoffs in Form von Dispersionen, Pulvern, Granulaten oder einer wenigstens eine Lage aufweisenden Folie;
(c) Bereitstellen eines ersten, temperierbaren Presswerkzeugs;
(d) Bereitstellen eines zweiten Presswerkzeugs;
(e) Aufbringen der polymeren Werkstoffe auf mindestens eine Oberfläche des Faserformstoffs;
(f) Verpressen des Faserformstoffs und der polymeren Werkstoffe mit dem ersten Presswerkzeug zu einem Rohling;
(g) Verpressen des in Schritt (f) erhaltenen Rohlings mit dem zweiten Presswerkzeug zu einem Formteil;
   wobei:
   - in Schritt (f) aus wenigstens einem der polymeren Werkstoffe eine erste, oberflächliche Beschichtungszone erzeugt wird, die eine Dicke D1 im Bereich von 10 bis 200 µm hat;
   - in Schritt (f) aus wenigstens einem der polymeren Werkstoffe und Faserformstoff eine zweite, kraftschlüssig verbindende Beschichtungszone erzeugt wird, die eine Dicke D2 im Bereich von 10 bis 200 µm hat.

Dieses vorgeschlagene Verfahren ermöglicht darüber hinaus durch entsprechende Wahl der Werkstoffe und auf Grund der Dicken der zwei Beschichtungszonen eine präzise Steuerung sowohl der Eindringtiefe des zweiten Werkstoffs in den Faserformstoff als auch der Anschmiegung des ersten Werkstoffs an die Oberfläche des Faserformstoffs.

Es kann vorgesehen sein, dass das Verpressen in Schritt (f) bei Temperaturen im Bereich von 160 bis 230 °C oder im Bereich von 160 bis 220 °C oder im Bereich von 180 bis 220 °C erfolgt.

Es kann vorgesehen sein, dass das Verpressen in Schritt (g) bei Temperaturen im Bereich von 20 bis 140 °C oder im Bereich von 80 bis 120 °C oder im Bereich von 90 bis 110 °C erfolgt.

Bei dem erfindungsgemäßen Verfahren kann vorgesehen sein, dass:
- ein erster polymerer Werkstoff ein thermoplastisches Matrixpolymer mit einer ersten Schmelztemperatur enthält;
- ein zweiter polymerer Werkstoff ein thermoplastisches Matrixpolymer mit einer zweiten Schmelztemperatur enthält;
- die erste Schmelztemperatur um mehr als 5 °C oder um mehr als 10 °C oder um mehr als 20 °C oder um mehr als 30 °C höher als die zweite Schmelztemperatur ist.

Bei dem erfindungsgemäßen Verfahren kann vorgesehen sein, dass:
- in Schritt (b) eine Folie bereitgestellt wird, die eine erste Folienschicht aus dem ersten polymeren Werkstoff und eine zweite Folienschicht aus dem zweiten polymeren Werkstoff aufweist;
- in Schritt (e) die Folie derart auf wenigstens eine Oberfläche des Faserformstoffs aufgebracht wird, dass die zweite Folienschicht dem Faserformstoff zugewandt ist.

Nach einer Ausführungsform des erfindungsgemäßen Verfahrens ist vorgesehen, dass in Schritt (f) und/oder in Schritt (g) eine Oberfläche der ersten Beschichtungszone erzeugt wird, die eine Topografie oder Unebenheit der Oberflächenhöhe aufweist mit einem arithmetischen Mittenrauwert Ra im Bereich von 10 bis 80 µm oder im Bereich von 10 bis 50 µm oder im Bereich von 20 bis 40 µm.

Vorteilhafte Weiterbildungen des erfindungsgemäßen Verfahrens zeichnen sich dadurch aus, dass:
- der Faserformstoff und der mindestens eine polymere Werkstoff in Schritt (f) bei Temperaturen im Bereich von 160 bis 220 °C, vorzugsweise 180 bis 220 °C verpresst werden;
- der Rohling in Schritt (g) bei Temperaturen im Bereich von 80 bis 120 °C, vorzugsweise 90 bis 110 °C verpresst wird;
- der Faserformstoff und der mindestens eine polymere Werkstoff in Schritt (f) zu einem Rohling mit einer Dicke von 1,5 bis 4,0 mm, vorzugsweise 1,8 bis 3,0 mm verpresst werden;
- der Rohling in Schritt (g) zu einem Träger mit einer Dicke von 1,5 bis 4,0 mm, vorzugsweise 1,6 bis 3,0 mm verpresst wird;
- der Faserformstoff und der mindestens eine polymere Werkstoff in Schritt (f) bei Drücken im Bereich von 0,26 bis 0,80 kN/cm², vorzugsweise 0,28 bis 0,60 kN/cm², und insbesondere 0,28 bis 0,55 kN/cm² zu dem Rohling verpresst werden;
- der Rohling in Schritt (g) bei Drücken im Bereich von 0,05 bis 0,25 kN/cm², vorzugsweise 0,05 bis 0,20 kN/cm², und insbesondere 0,08 bis 0,12 kN/cm² zu dem Träger verpresst wird;
- das Zeitintervall zwischen dem Abschluss des Schrittes (f) und dem Beginn des Schrittes (g) 0,5 bis 30 s, vorzugsweise 1 bis 10 s und insbesondere 1 bis 5 s beträgt;
- das erste Presswerkzeug als Rollen- oder Flachpresse ausgebildet ist und im Schritt (f) ein planer Rohling erzeugt wird; und/oder
- das zweite Presswerkzeug als Formpresse ausgebildet ist und im Schritt (g) ein flächenhafter, dreidimensional konturierter Träger erhalten wird.

Durch das zweite Presswerkzeug kann vorgesehen sein, dass eine Formgebung des Formteils erreicht wird, bei dem es zwei Punkten der Rückseite des Formteils gibt, wobei die Tangente an die äußere Oberfläche des Formteils von der Verbindungslinie von zwei Punkten der Rückseite des Formteils mindestens 2 cm entfernt liegt Vorzugsweise ist das in Schritt (g) eingesetzte zweite Presswerkzeug ebenfalls temperierbar, um die Temperatur im Schritt (g) exakt regeln zu können. Dies kann erforderlich sein, wenn für den arithmetischen Mittenrauwert Ra der Oberfläche der Beschichtung des Formteils ein enger Toleranzbereich angestrebt wird und/oder in Schritt (g) der Träger schnell abgekühlt werden soll.

Bei dem Verfahren kann insbesondere vorgesehen sein, dass der Faserformstoff und der mindestens eine polymere Werkstoff in Schritt (f) bei Temperaturen im Bereich von 160 bis 220 °C, vorzugsweise 180 bis 220 °C verpresst werden.

Bei dem Verfahren kann weiterhin vorgesehen sein, dass der Rohling in Schritt (g) bei Temperaturen im Bereich von 80 bis 120 °C, vorzugsweise im Bereich von 90 bis 110 °C verpresst wird.

Bei dem Verfahren kann weiterhin vorgesehen sein, dass der Faserformstoff und der mindestens eine polymere Werkstoff in Schritt (f) zu einem Rohling mit einer Dicke von 1,5 bis 4,0 mm, vorzugsweise von 1,8 bis 3,0 mm verpresst werden.

Bei dem Verfahren kann weiterhin vorgesehen sein, dass der Rohling in Schritt (g) zu einem Träger mit einer Dicke von 1,5 bis 4,0 mm, vorzugsweise 1,6 bis 3,0 mm verpresst wird.

Bei dem Verfahren kann weiterhin vorgesehen sein, dass der Faserformstoff und der mindestens eine polymere Werkstoff in Schritt (f) bei Drücken im Bereich von 0,26 bis 0,80 kN/cm², vorzugsweise 0,28 bis 0,60 kN/cm², und insbesondere 0,28 bis 0,55 kN/cm² zu dem Rohling verpresst werden.

Bei dem Verfahren kann weiterhin vorgesehen sein, dass der Rohling in Schritt (g) bei Drücken im Bereich von 0,05 bis 0,25 kN/cm², vorzugsweise 0,05 bis 0,20 kN/cm², und insbesondere 0,08 bis 0,12 kN/cm² zu dem Träger verpresst wird.

Bei dem Verfahren kann weiterhin vorgesehen sein, dass das Zeitintervall zwischen dem Abschluss des Schrittes (f) und dem Beginn des Schrittes (g) 0,5 bis 30 s, vorzugsweise 1 bis 10 s und insbesondere 1 bis 5 s beträgt.

Bei dem Verfahren kann weiterhin vorgesehen sein, dass das erste Presswerkzeug als Rollen- oder Flachpresse ausgebildet ist und im Schritt (f) ein planer Rohling erzeugt wird.

Bei dem Verfahren kann weiterhin vorgesehen sein, dass das zweite Presswerkzeug als Formpresse ausgebildet ist und im Schritt (g) ein flächenhafter, dreidimensional konturierter Träger erhalten wird.

Um die Investitions- bzw. Anlagenkosten zu verringern, kann von einer Temperierung des zweiten Presswerkzeugs abgesehen werden. Bei dieser Verfahrensvariante wird die dem Rohling in Schritt (f) mittels des ersten Presswerkzeugs zugeführte, latente Wärme genutzt. Hierzu wird das Zeitintervall zwischen dem Abschluss des Schrittes (f) und dem Beginn des Schrittes (g) innerhalb der vorstehenden Grenzen derart gewählt, dass der Rohling bei Beginn des Schrittes (g) eine vorgegebene Temperatur im Bereich von 20 bis 140 °C, vorzugsweise 80 bis 120 °C und insbesondere 90 bis 110 °C hat.

Temperierbare Presswerkzeuge sind dem Fachmann bekannt und umfassen beispielsweise Pressstempel bzw. Formnester, die mit Kühlkanälen zur Durchleitung eines Heiz- oder Kühlfluids ausgestattet sind. Sofern das in Schritt (g) eingesetzte zweite Presswerkzeug temperierbar ist, kann dieses im Rahmen der Erfindung auch zur Abkühlung verwendet werden. Hierzu wird beispielsweise Wasser mit einer Temperatur von 15 bis 25 °C durch die Kühlkanäle geleitet.

Das Verpressen des Faserformstoffs und des mindestens einen polymeren Werkstoffs mit dem ersten Presswerkzeug zu einem Rohling in Schritt (f) sowie das Verpressen des Rohlings mit dem zweiten Presswerkzeug in Schritt (g) erfolgt bevorzugt "auf Distanz" bzw. "auf Anschlag", wobei der lichte Spalt des ersten Presswerkzeugs, d.h. der Abstand zwischen den Oberflächen eines ersten und zweiten Pressstempels bzw. der Abstand zwischen einer ersten und zweiten Presswalze und hiervon unabhängig der lichte Spalt des zweiten Presswerkzeugs, d.h. der Abstand zwischen den Oberflächen eines ersten und zweiten Formnests, jeweils nach unten begrenzt ist auf einen Wert von 1,5 bis 4,0 mm, insbesondere 1,6 bis 3,0 mm. Das Verpressen "auf Anschlag" wird beispielweise mithilfe von Distanzstücken bewerkstelligt, die zwischen dem ersten und zweiten Presstempel bzw. zwischen dem ersten und zweiten Formnest angeordnet sind. Vorzugsweise nimmt der hierbei in Schritt (f) auf den Faserformstoff und den mindestens einen polymeren Werkstoff sowie in Schritt (g) auf den Rohling ausgeübte Druck einen Wert innerhalb der vorstehenden Grenzen an.

In einer alternativen Ausführungsform des Verfahrens werden die Schritte (f) und (g) druck- bzw. kraftgesteuert ausgeführt. Hierzu werden der von dem ersten und zweiten Presswerkzeug in den Schritten (f) und (g) jeweils ausgeübte Druck nach oben auf einen Wert innerhalb der vorstehenden Grenzen begrenzt.

Bevorzugt wird das Verfahren so geführt, dass die Abmessung des in Schritt (g) verwandten "Anschlags" bzw. lichten Spalts des zweiten Presswerkzeugs 90 bis 110 %, vorzugsweise 95 bis 105 % der Abmessung des in Schritt (f) eingesetzten "Anschlags" bzw. lichten Spalts des ersten Presswerkzeugs entspricht. Schritt (g) dient im Wesentlichen dazu, dem noch warmen und plastisch verformbaren Rohling eine dreidimensionale Kontur aufzuprägen. Die hierfür aufzubringende Kraft bzw. Druck ist geringer als die Kraft bzw. der Druck, der in Schritt (f) erforderlich ist, um den Faserformstoff zu komprimieren. Je nach Zusammensetzung des Faserformstoffs, insbesondere des Anteils an Naturfasern, relaxiert der in Schritt (f) erzeugte Rohling ggf. nach Druckentlastung bzw. nach Abschluss des Schritts (f) und dehnt sich geringfügig aus. Dieser Ausdehnung wird Rechnung getragen, indem der in Schritt (g) eingesetzte "Anschlag" bzw. lichte Spalt des zweiten Presswerkzeugs geringfügig größer gewählt wird als der in Schritt (f) verwandte "Anschlag". Insbesondere wird in Schritt (g) für das zweite Presswerkzeug ein "Anschlag" verwendet, dessen Abmessung 101 bis 110 %, vorzugsweise 101 bis 105 % der Abmessung des in Schritt (f) für das erste Presswerkzeug eingesetzten "Anschlags" beträgt.

Im Fall, dass der Rohling nach Beendigung des Schritts (f) bzw. nach Entnahme aus dem ersten Presswerkzeug sein Volumen bei Abkühlung verringert, wird in Schritt (g) für das zweite Presswerkzeug ein "Anschlag" verwendet, dessen Abmessung 90 bis 99 %, vorzugsweise 95 bis 99 % der Abmessung des in Schritt (f) für das erste Presswerkzeug eingesetzten "Anschlags" beträgt.

Die Erläuterungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen und Ausführungsbeispiele der Erfindung beispielhaft anhand der beigefügten Zeichnungen näher erläutert werden. Die daraus hervorgehenden einzelnen Merkmale sind jedoch nicht auf die einzelnen Ausführungsformen und Ausführungsbeispiele beschränkt, sondern können mit weiter oben beschriebenen einzelnen Merkmalen und/oder mit einzelnen Merkmalen anderer Ausführungsformen und Ausführungsbeispiele verbunden werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Es zeigen schematisch:
Fig. 1 eine perspektivische Ansicht eines Rohlings für ein Formteil in Explosionsdarstellung;
Fig. 2 eine perspektivische Ansicht von Presswerkzeugen;
Fig. 3 eine Schnittansicht der Oberfläche eines Formteils.

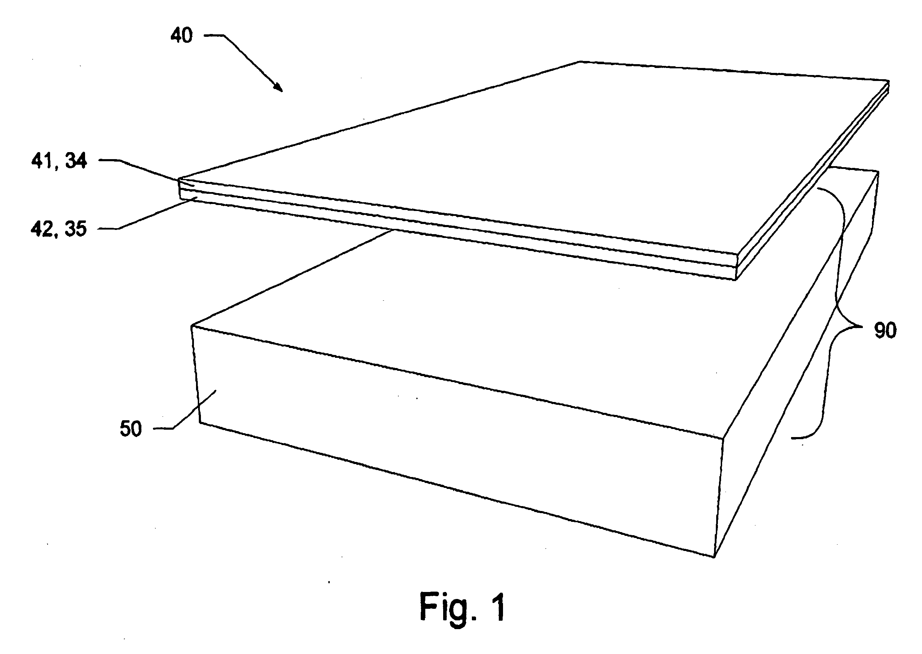

Fig. 1 zeigt in Explosionsdarstellung eine vorteilhafte Ausführungsform der Erfindung, bei welcher eine Faserformstoffmatte 50 mit einer Folie 40 beschichtet bzw. heiß verpresst wird, um einen Rohling 90 zu erhalten. Vorzugsweise umfasst die Folie 40 eine erste Folienschicht 41 aus einem ersten polymeren Werkstoff 34 und eine zweite Folienschicht 42 aus einem zweiten polymeren Werkstoff 35. Erfindungsgemäß oder vorzugsweise bezeichnet der Begriff "polymerer Werkstoff' ein Material, das mehr als 60 Gew.%, vorzugsweise mehr als 80 Gew.-% und ggf. bis zu 100 Gew.-% eines Polymers oder einer Mischung von zwei oder mehr Polymeren, bezogen auf das Gesamtgewicht des jeweiligen polymeren Werkstoffs 34 oder 35, enthält. Das mindestens eine Polymer - nachfolgend auch als Matrixpolymer bezeichnet, ist vorzugsweise ein thermoplastisches Polymer. Insbesondere ist das Matrixpolymer gewählt aus der Gruppe, umfassend Polyolefine, Polyamid, Polyethylen, Polyvinylchlorid, Polyester, Polyacrylate, Polypropylen, Polylactide und/oder Mischungen davon. Besonders bevorzugt bestehen die Matrixpolymere der Werkstoffe 34 und 35 aus Polypropylen und/oder Propylen-Copolymeren. Neben dem mindestens einen Matrixpolymer können die polymeren Werkstoffe 34 und 35 bis zu 40 Gew.%, vorzugsweise bis zu 20 Gew.-% an Additiven, wie Weichmacher, UV-Stabilisatoren, Farbpigmente und Füllstoffe enthalten.

In einer bevorzugten Weiterbildung der Erfindung enthält der Werkstoff 34 ein thermoplastisches Matrixpolymer mit einer Schmelztemperatur, die um mehr als 5 °C, vorzugsweise um mehr als 10 °C, insbesondere um mehr als 20 °C und besonders bevorzugt um mehr als 30 °C höher ist als die Schmelztemperatur des thermoplastischen Matrixpolymers des Werkstoffs 35.

Die Schmelztemperatur des jeweiligen Matrixpolymers der Werkstoffe 34 und 35 wird mittels Dynamischer-Differenz-Kalorimetrie (DDK bzw. DSC für Differential Scanning Calorimetry) bestimmt. Die Methode der DDK gemäß DIN 53765 bzw. ISO 11357-3 ist dem Fachmann für Kunststoffverarbeitung bekannt und wird beispielsweise mit einem Kalorimeter des Typs "DSC 1" der Firma Mettler-Toledo durchgeführt. Hierbei werden zwei identische Tiegel mit einem Durchmesser von etwa 5 mm in einem homogen heizbaren Ofenraum angeordnet. In einen der Tiegel wird eine abgewogene Menge von 10 bis 20 mg des zu analysierenden Polymerharzes bzw. der Mischung von Polymerharzen gelegt; der andere Tiegel bleibt leer und dient als Referenz. Die Tiegel sind auf Halterungen angeordnet, die mit hochempfindlichen Temperatursensoren ausgestattet sind. Die DDK-Analyse umfasst einen oder zwei Durchläufe, bei denen die beiden Tiegel und die zu untersuchende Probe jeweils unter Schutzgas (beispielsweise Stickstoff) von 0 bis 220 °C erhitzt und wieder abgekühlt werden. Die Aufheizung und Abkühlung erfolgt gemäß DIN 53765-A-20 gleichmäßig mit einer Rate von 20 Kelvin/min. Während der beiden Durchläufe wird die Differenz der Temperaturen der beiden Tiegel als Funktion der Zeit bzw. als Funktion der Ofentemperatur aufgezeichnet. Die Schmelztemperatur entspricht gemäß DIN 53765 dem Mittelpunkt des Schmelztemperaturbereiches, der durch einen charakteristischen Verlauf der Differenztemperatur (Peak der Schmelzenthalpie) gekennzeichnet ist.

Wie in Fig. 1 gezeigt, wird die Folie 40 derart auf der Faserformstoffmatte 50 angeordnet, dass die zweite Folienschicht 42 aus dem polymeren Werkstoff 35 mit dem Matrixpolymer mit niedriger Schmelztemperatur der Faserformstoffmatte 50 zugewandt ist. Beim Verpressen der Folie 40 mit der Faserformstoffmatte 50 in Schritt (f) des erfindungsgemäßen Verfahrens bei einer Temperatur von 160 bis 230 °C wird die zweite Folienschicht 42 in stärkerem Maße als die erste Folienschicht 41 angeschmolzen bzw. plastifiziert. Hierdurch wird das Eindringen des Werkstoffs 35 in die Faserformstoffmatte 50 begünstigt. Aufgrund ihrer im Vergleich zur zweiten Folienschicht 42 höheren Viskosität dringt die erste Folienschicht 41 nicht in die Faserformstoffmatte 50 ein. Durch entsprechende Wahl der Matrixpolymere der Werkstoffe 34 und 35 sowie der Dicken der ersten und zweiten Folienschichten 41 und 42 kann die Eindringtiefe des Werkstoffs 35 in die Faserformstoffmatte 50 und die Anschmiegung der ersten Folienschicht 41 an die Oberfläche der Faserformstoffmatte 50 präzise gesteuert werden.

Vorzugsweise wird die zweischichtige Folie 40 mittels Koextrusion der beiden Werkstoffe 34 und 35 durch eine Breitschlitzdüse hergestellt und weist eine Gesamtdicke von 40 bis 1000 µm, vorzugsweise 60 bis 200 µm und insbesondere 80 bis 120 µm auf. Das Verhältnis V = F1/F2 der Dicke F1 der ersten Folienschicht 41 zur Dicke F2 der zweiten Folienschicht 42 liegt im Bereich von 0,1 bis 5,0; vorzugsweise 0,1 bis 0,9; insbesondere 0,1 bis 0,5 und besonders bevorzugt 0,2 bis 0,4.

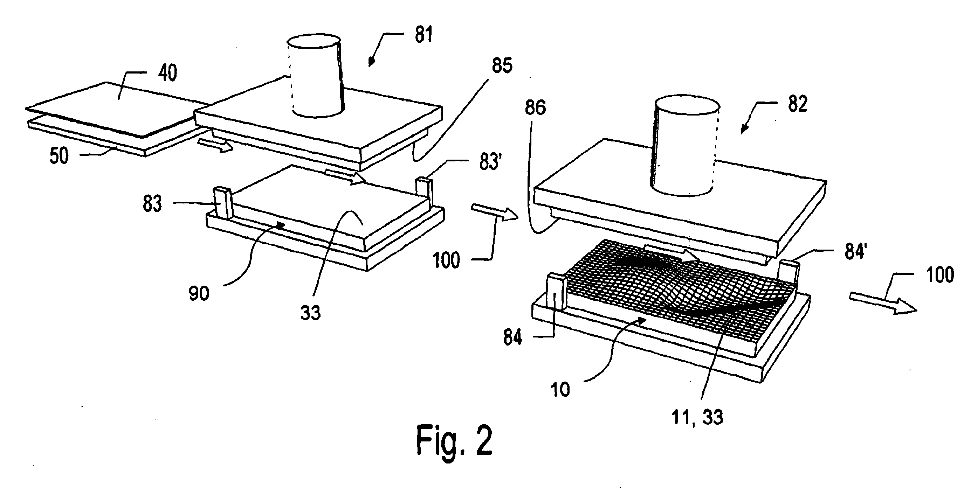

In Fig. 2 ist schematisch die Herstellung der erfindungsgemäßen Formteile 10 dargestellt. Auf eine Faserformstoffmatte 50 werden gemäß einem Schritt (e) des erfindungsgemäßen Verfahrens ein oder mehrere polymere Werkstoffe 34, 35 aufgebracht, beispielsweise in Form einer ein- oder mehrlagigen Folie 40, und gemäß einem Schritt (f) des erfindungsgemäßen Verfahrens in einem ersten, temperierbaren Presswerkzeug 81 heiß verpresst zu einem Rohling 90, der anschließend gemäß einem Schritt (g) des erfindungsgemäßen Verfahrens in einem zweiten, als Formpresse ausgebildeten und gegebenenfalls temperierbaren Presswerkzeug 82 zu einem dreidimensional konturierten Formteil 10, das einen die heiß verpresste Faserformstoffmatte 50 aufweisenden Träger 20 und eine Beschichtung 30 aus den polymeren Werkstoffen 34, 35 aufweist, geformt wird. Die mit dem Bezugszeichen 100 markierten Pfeile symbolisieren den Fertigungsfluss. Vorzugsweise sind das erste Presswerkzeug 81 und/oder das zweite Presswerkzeug 82 mit Anschlägen bzw. Distanzstücken 83, 83' respektive 84, 84' ausgestattet, die die Abmessung des lichten Spalts des jeweiligen Presswerkzeugs 81, 82 und damit die Dicke des Rohlings 90, respektive des Formteils 10 nach unten begrenzen.

Vorzugsweise weist das erste Presswerkzeug 81 eine erste Pressfläche 85 auf, mit der es in Schritt (f) an einer von der Faserformstoffmatte 50 abgewandten Oberfläche 33 der Beschichtung 30 anliegt. Außerdem weist das zweite Presswerkzeug 82 eine zweite Pressfläche 86 auf, mit der es in Schritt (g) an der Oberfläche 33 der Beschichtung 30 anliegt. Beide Pressflächen 85, 86 haben einen arithmetischen Mittenrauwert Ra von höchstens 0,4 µm. Die Oberfläche 33 der Beschichtung 30 bildet zugleich die Oberfläche 11 des Formteils 10 und weist eine Topografe auf, die einen arithmetischen Mittenrauwert Ra im Bereich von 10 bis 80 µm hat. Somit sind beide Pressflächen 85, 86 glatter als die Topografie der Oberfläche 11, 33.

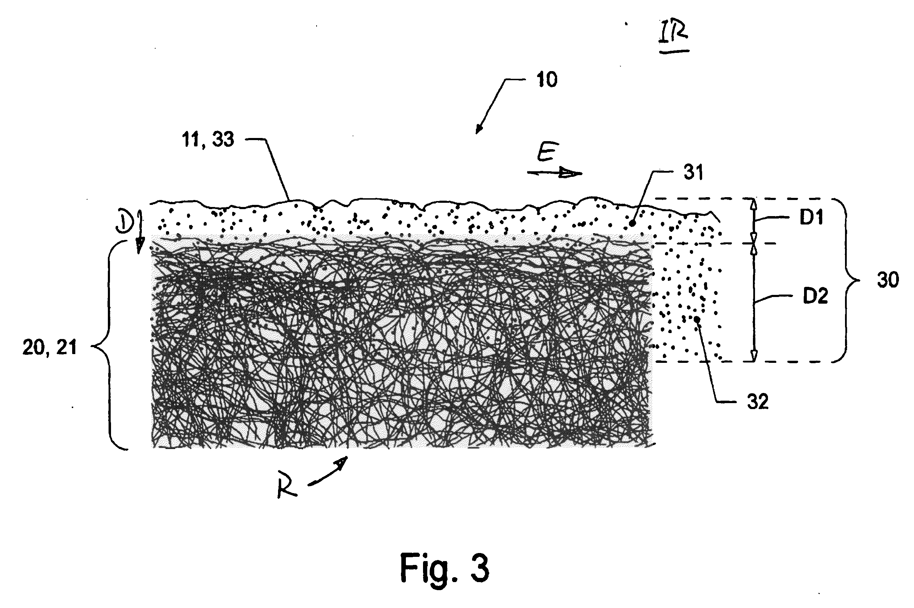

Fig. 3 zeigt eine schematische Schnittansicht einer Oberfläche 11, 33 eines erfindungsgemäß heiß verpressten Formteils 10 mit einem Träger 20 aus Faserformstoff 21 und einer Beschichtung 30. Die Oberfläche 11 des Formteils 10 ist als die sichtseitige Oberfläche vorgesehen, die die Sichtseite des Formteils 10 bildet und beim bestimmungsgemäßen Einbau des Formteils in einem Rahmenbauteil wie z.B. einer Karosserie eines Fahrzeugs, dem Innenraum IR zugewandt sind. Entgegen gesetzt zu der Oberfläche 11 ist die rückseitige Oberfläche R gelegen. Die Oberfläche erstreckt sich flächig, so dass in der Schnittdarstellung eine Erstreckungsrichtung mit einem Pfeil E1 eingetragen ist. Weiterhin ist in der Figur 3 eine Dickenrichtung D des Formteils 10 eingetragen.

Die Beschichtung oder Dekorschicht 30 umfasst eine erste, oberflächennahe Beschichtungszone 31 und eine zweite, kraftschlüssig mit dem Faserformstoff 21 verbundene Beschichtungszone 32. Unter Beschichtungszone wird hierin ein Dickenbereich des Formteils 10 verstanden, der sich quer zur flächigen Ersteckung des Formteils verlaufende Dickenrichtung D (Figur 3) des Formteils 10 erstreckt. Unter der ersten Beschichtungszone wird hierin ein sich oberer, d.h. an der Sichtseite 11 anliegender Dickenbereich des Formteils 10 verstanden, der somit die sichtseitige Oberfläche 11 als Außenfläche hat und der sich quer zu dieser in der Dickenrichtung D (Figur 3) des Formteils 10 erstreckt.

Die erste oder äußere Beschichtungszone 31 ist gebildet aus und insbesondere besteht aus aus einem oder mehreren der vorangehend beschriebenen polymeren Werkstoffe 34, 35 und ist praktisch frei von Bestandteilen des Faserformstoffs 21. Die Oberfläche 33 der ersten Beschichtungszone 31 bildet zugleich die Oberfläche 11 des Formteils 10 und weist eine Topografie auf, die im Wesentlichen konform zur Oberfläche des Faserformstoffs 21 ist. Die Topografie der Oberfläche 11, 33 ist im Wesentlichen durch die Form und die mehr oder minder zufällige Anordnung der Fasern des Faserformstoffs 21 geprägt und zeichnet sich aus durch einen arithmetischen Mittenrauwert Ra im Bereich von 10 bis 80 µm, vorzugsweise 10 bis 50 µm und insbesondere 20 bis 40 µm. Die erste Beschichtungszone 31 bzw. ihre Oberfläche 33 vermittelt die gewünschte holzartige Haptik und fungiert zudem als Versiegelung, die den Faserformstoff 21 bzw. das Formteil 10 vor schädigenden Einwirkungen, wie Kratzern oder Flüssigkeiten schützt.

Die zweite Beschichtungszone 32 umfasst einen Bereich, in dem ein oder mehrere der vorangehend beschriebenen polymeren Werkstoffe 34, 35 in den Faserformstoff 21 eingedrungen sind. Neben den Werkstoffen 34, 35 enthält die zweite Beschichtungszone 32 Fasern und Bindemittel des Faserformstoffs 21. Die zweite Beschichtungszone 32 gewährleistet eine dauerhaft kraftschlüssige Verankerung der Beschichtung 30 an dem Faserformstoff 21 bzw. an dem Träger 20. In einer bevorzugten, vorangehend beschriebenen Ausführungsform der Erfindung besteht das Bindemittel des Faserformstoffs 21 aus plastifizierten und nachfolgend durch Abkühlen zu einer Matrix verfestigten Fasern aus einem thermoplastischen Polymer, insbesondere aus Polypropylen und/oder Propylen-Copolymeren.

Die erste Beschichtungszone 31 hat eine Dicke D1 von 10 bis 200 µm, vorzugsweise 10 bis 60 µm und insbesondere 10 bis 30 µm.

Unabhängig von der ersten Beschichtungszone 31 hat die zweite Beschichtungszone 32 eine Dicke D2 von 10 bis 200 µm, vorzugsweise 20 bis 100 µm und insbesondere 20 bis 50 µm.

### Bezugszeichenliste

- 10: Formteil
- 11: Oberfläche des Formteils
- 20: Träger
- 21: heiß verpresster Faserformstoff
- 22: Fasern
- 30: Beschichtung
- 31: erste, oberflächliche Beschichtungszone
- 32: zweite, kraftschlüssig verbindende Beschichtungszone
- D1: Dicke der ersten Beschichtungszone
- D2: Dicke der zweiten Beschichtungszone
- 33: Oberfläche der Beschichtung / Oberfläche des Formteils
- 34: erster polymerer Werkstoff
- 35: zweiter polymerer Werkstoff
- 40: Folie
- 41: erste Folienschicht
- 42: zweite Folienschicht
- 50: Faserformstoffmatte
- 81: erstes Presswerkzeug
- 82: zweites Presswerkzeug
- 83, 83': Distanzstücke von 81
- 84, 84': Distanzstücke von 82
- 85: erste Pressfläche
- 86: zweite Pressfläche
- 90: Rohling
- 100: Fertigungsfluss

## Patentansprüche

1. Formteil (10) mit einer sichtseitigen und einer rückseitigen Oberfläche (S1, S2), das Formteil (10) aufweisend:
- einen Träger (20) aus heiß verpresstem Faserformstoff (21);
- eine Beschichtung (30) aus wenigstens einem polymeren Werkstoff (34, 35); wobei der wenigstens eine polymere Werkstoff (34, 35) teilweise im Faserformstoff (21) eingedrungen ist und die Oberfläche (33) der Beschichtung (30) durch die Form und die mehr oder minder zufällige Anordnung der Fasern des Faserformstoffs (21) geprägt ist und
wobei die Oberfläche (33) der Beschichtung (30) zumindest bereichsweise einen arithmetischen Mittenrauwert Ra im Bereich von 10 bis 80 µm hat.

2. Formteil (10) nach dem voranstehenden Anspruch, wobei Oberfläche (33) der Beschichtung (30) zumindest bereichsweise einen arithmetische Mittenrauwert Ra im Bereich von 20 bis 80 µm hat.

3. Formteil (10) nach einem der voranstehenden Ansprüche, wobei die Beschichtung (30) eine erste, oberflächliche Beschichtungszone (31) und eine zweite, kraftschlüssig verbindende Beschichtungszone (32) aufweist.

4. Formteil (10) nachAnspruch 3, wobei
- die erste Beschichtungszone (31) wenigstens einen der polymeren Werkstoffe (34, 35) enthält und eine Dicke D1 im Bereich von 10 bis 200 µm oder im Bereich von 10 bis 60 µm oder im Bereich von 10 bis 30 µm hat;
- die zweite Beschichtungszone (32) wenigstens einen der polymeren Werkstoffe (34, 35) und Faserformstoff (21) enthält und eine Dicke D2 im Bereich von 10 bis 200 µm oder im Bereich von 20 bis 100 µm oder im Bereich von 20 bis 50 µm hat.

5. Formteil (10) nach einem der voranstehenden Ansprüche, wobei:
- ein erster polymerer Werkstoff (34) des wenigstens einen polymeren Werkstoffs (34, 35) ein thermoplastisches Matrixpolymer mit einer ersten Schmelztemperatur enthält;
- ein zweiter polymerer Werkstoff (35) des wenigstens einen polymeren Werkstoffs (34, 35) ein thermoplastisches Matrixpolymer mit einer zweiten Schmelztemperatur enthält;
- die erste Schmelztemperatur um mehr als 5 °C oder um mehr als 10 °C oder um mehr als 20 °C oder um mehr als 30 °C höher als die zweite Schmelztemperatur ist.

6. Formteil (10) nach dem voranstehenden Anspruch, wobei:
- der Träger (20) mit einer Folie (40) beschichtet ist, die eine erste Folienschicht (41) aus dem ersten polymeren Werkstoff (34) und eine zweite Folienschicht (42) aus dem zweiten polymeren Werkstoff (35) aufweist;
- die zweite Folienschicht (42) dem Träger (20) zugewandt ist.

7. Formteil (10) nach einem der voranstehenden Ansprüche, wobei:
- jeder des wenigstens einen polymeren Werkstoffs (34, 35) ein Matrixpolymer und gegebenenfalls Additive, wie Farbpigmente und UV-Stabilisatoren enthält;
- das Matrixpolymer gewählt ist aus Polyolefinen, Polyester, Polypropylen, Polyamid oder Mischungen davon und der Anteil an Additiven bezogen auf den polymeren Werkstoff 0 bis 15 Gew.-% beträgt.

8. Formteil (10) nach einem der voranstehenden Ansprüche, wobei der Faserformstoff (21) synthetische Fasern und/oder Naturfasern aufweist.

9. Formteil (10) nach einem der voranstehenden Ansprüche, wobei das Formteil (10) zusätzlich wenigstens ein Anbauteil aus Kunststoff und/oder einem metallischen Werkstoff aufweist, das jeweils mit dem Träger kraftschlüssig verbunden ist.

10. Formteil (10) nach einem der voranstehenden Ansprüche, wobei die Oberfläche (33) holzartig ist und/oder eine holzartige Haptik aufweist.

11. Verfahren zur Herstellung eines Formteils (10), aufweisend die Schritte:
- Aufbringen zumindest eines polymeren Werkstoffs (34, 35) in Form von Dispersionen, Pulvern, Granulaten oder einer wenigstens eine Lage aufweisenden Folie (40) auf mindestens eine Oberfläche eines Faserformstoffs (50);
- Verpressen des Faserformstoffs (50) und der polymeren Werkstoffe (34, 35) mit einem ersten temperierbaren Presswerkzeug (81) bei Temperaturen im Bereich von 160 bis 230 °C zu einem Rohling (90);
- Verpressen des erhaltenen Rohlings (90) mit einem zweiten Presswerkzeug (82) bei Temperaturen im Bereich von 20 bis 140 °C zu einem Formteil (10),
wobei der wenigstens eine polymere Werkstoff (34, 35) teilweise in den Faserformstoff (21) eindringt und die Oberfläche (33) der Beschichtung (30) durch die Form und die mehr oder minder zufällige Anordnung der Fasern des Faserformstoffs (21) geprägt ist und
wobei die Oberfläche (33) der Beschichtung (30) zumindest bereichsweise einen arithmetischen Mittenrauwert Ra im Bereich von 10 µm bis 80 µm hat.

12. Verfahren nach dem Anspruch 11, wobei die Oberfläche (33) durch die Form und die Anordnung der Fasern des Faserformstoffs (21) geprägt ist und die Oberfläche (33) der Beschichtung (30) zumindest bereichsweise einen arithmetischen Mittenrauwert Ra im Bereich von 20 µm bis 80 µm hat.

13. Verfahren nach dem Anspruch 11 oder 12, wobei bei dem Verpressen zum Rohling (90) die Temperaturen im Bereich von 160 bis 220 °C oder im Bereich von 180 bis 220 °C liegen und wobei bei dem Verpressen zum Formteil (10) die Temperaturen im Bereich von 80 bis 120 °C oder im Bereich von 90 bis 110 °C liegen.

14. Verfahren nach einem der Ansprüche 11 bis 13, wobei:
- das Verpressen zum Rohling aus wenigstens einem der polymeren Werkstoffe (34, 35) eine erste, oberflächliche Beschichtungszone (31) erzeugt wird, die eine Dicke D1 im Bereich von 10 bis 200 µm oder im Bereich von 10 bis 60 µm oder im Bereich von 10 bis 30 µm hat;
- das Verpressen zum Rohling aus wenigstens einem der polymeren Werkstoffe (34, 35) und Faserformstoff (21) eine zweite, kraftschlüssig verbindende Beschichtungszone (32) erzeugt wird, die eine Dicke D2 im Bereich von 10 bis 200 µm oder im Bereich von 20 bis 100 µm oder im Bereich von 20 bis 50 µm hat.

15. Verfahren nach einem der Ansprüche 11 bis 14, wobei:
- ein erster polymerer Werkstoff (34) ein thermoplastisches Matrixpolymer mit einer ersten Schmelztemperatur enthält;
- ein zweiter polymerer Werkstoff (35) ein thermoplastisches Matrixpolymer mit einer zweiten Schmelztemperatur enthält;
- die erste Schmelztemperatur um mehr als 5 °C oder um mehr als 10 °C oder um mehr als 20 °C oder um mehr als 30 °C höher als die zweite Schmelztemperatur ist.

## Claims

1. A moulded part (10) with a visible surface and a rear surface (S1, S2), with the moulded part (10) comprising:
- a substrate (20) of hot-pressed fibrous moulding material (21); and
- a coating (30) of at least one polymer material (34, 35);
wherein the at least one polymer material (34, 35) is partially penetrated in the fibrous moulding material (21) and the surface (33) of the coting (30) is defined by the shape and the more or less random arrangement of the fibres of the fibrous moulding material (21), and
wherein the surface (33) of the coating (30) has at least sectionally a centre line average height Ra in the range of 10 to 80 µm.

2. The moulded part (10) according to claim 1, wherein the surface (33) of the coating (30) has at least sectionally a centre line average height Ra in the range of 20 to 80 µm.

3. The moulded part (10) according to one of the preceding claims, wherein the coating (30) features or comprises a first, superficial coating zone (31) and a second, non-positively connecting coating zone (32).

4. The moulded part (10) according to claim 3, wherein
- the first coating zone (31) contains at least one of the polymer materials (34, 35) and has a thickness D1 in the range of 10 to 200 µm or in the range of 10 to 60 µm or in the range of 10 to 30 µm; and
- the second coating zone (32) contains at least one of the polymer materials (34, 35) and fibrous moulding material (21) and has a thickness D2 in the range of 10 to 200 µm or in the range of 20 to 100 µm or in the range of 20 to 50 µm.

5. The moulded part according to one of the preceding claims, wherein:
- a first polymer material (34) of the at least one polymer material (34, 35) contains a thermoplastic matrix polymer with a first melting point;
- a second polymer material (35) of the at least one polymer material (34, 35) contains a thermoplastic matrix polymer with a second melting point; and
- the first melting point is higher than the second melting point by more than 5°C or by more than 10°C or by more than 20°C or by more than 30°C.

6. The moulded part according to one of the preceding claims, wherein:
- the substrate (20) is coated with a film (40) that contains a first film layer (41) of the first polymer material (34) and a second film layer (42) of the second polymer material (35),
- the second film layer (42) faces the substrate (20).

7. The moulded part (10) according to one of the preceding claims, wherein:
- each of the polymer materials (34, 35) contains a matrix polymer and, if applicable, additives such as colour pigments and UV stabilizers; and
- the matrix polymer is chosen from polyolefins, polyester, polypropylene, polyamide or mixtures thereof and the proportion of additives referred to the polymer material amounts to 0 to 15 wt.%.

8. The moulded part (10) according to one of the preceding claims, wherein the fibrous moulding material (21) features synthetic fibres and/or natural fibres.

9. The moulded part (10) according to one of the preceding claims, furthermore featuring at least one mounting part of plastic and/or a metallic material that is non-positively connected to the substrate.

10. The moulded part (10) according to one of the preceding claims, wherein the surface (33) is similar to wood and/or has wood-like haptics.

11. A method for manufacturing a moulded part (10), with the method comprising the steps of:
- applying the polymer materials (34, 35) onto at least one surface of the fibrous moulding material (50) in the form of dispersions, powders, granulates or a film (40) that consists of at least one layer;
- compressing the fibrous moulding material (50) and the polymer materials (34, 35) into a blank (90) with a first temperature-controlled pressing tool (81) at temperatures in the range of 160 to 230°C;
- compressing the obtained blank (90) into a moulded part (10) with a second pressing tool (82) at temperatures in the range of 20 to 140°C,
wherein the at least one polymer material (34, 35) partially penetrates in the fibrous moulding material (21) and the surface (33) of the coting (30) is defined by the shape and the more or less random arrangement of the fibres of the fibrous moulding material (21), and
wherein the surface (33) of the coating (30) has at least sectionally a centre line average height Ra in the range of 10 to 80 µm.

12. The method according to claim 11, wherein the surface (33) is defined by the shape and the arrangement of the fibres of the fibrous moulding material (21) and wherein the surface (33) of the coating (30) has at least sectionally a centre line average height Ra in the range of 20 to 80 µm.

13. The method according to claim 11 or 12, wherein during the step of compressing into the obtained blank the temperatures lie in the range of 180 to 220°C or in the range of 180 to 220°C and wherein the compressing into a moulded part (10) the temperatures lie in the range of 80 to 120°C or in the range of 90 to 110°C.

14. The method according to one of claims 11 to 13, wherein:
- a first, superficial coating zone (31) is produced during the compression into the blank of at least one of the polymer materials (34, 35), wherein this first, superficial coating zone (31) has a thickness D1 in the range of 10 to 200 µm or in the range of 10 to 60 µm or in the range of 10 to 30 µm; and
- a second, non-positively connecting coating zone (32) is produced during the compression into the blank of at least one of the polymer materials (34, 35) and fibrous moulding material (21), wherein this second, non-positively connecting coating zone (32) has a thickness D2 in the range of 10 to 200 µm or in the range of 20 to 100 µm or in the range of 20 to 50 µm.

15. The method according to one of the claims 11 to 14, wherein:
- a first polymer material (34) contains a thermoplastic matrix polymer with a first melting point;
- a second polymer material (35) contains a thermoplastic matrix polymer with a second melting point; and
- the first melting point is higher than the second melting point by more than 5°C or by more than 10°C or by more than 20°C or by more than 30°C.

## Revendications

1. Pièce moulée (10) avec une surface visible et une surface arrière, (S1, S2), la pièce moulée (10) comportant :
- un support (20) en une matière à mouler fibreuse (21) compressée à chaud ;
- un revêtement (30) en au moins une matière polymère (34, 35) ;
l'au moins une matière polymère (34, 35) ayant pénétré au moins en partie dans la matière à mouler fibreuse (21) et la surface (33) du revêtement (30) étant gaufrée par la forme et la disposition plus ou moins aléatoire des fibres de la matière à mouler fibreuse (21) et
la surface (33) du revêtement (30) ayant au moins par régions une valeur arithmétique de rugosité moyenne Ra de l'ordre de 10 à 80 µm.

2. Pièce moulée (10) selon la revendication précédente, la surface (33) du revêtement (30) ayant au moins par régions une valeur arithmétique de rugosité moyenne Ra de l'ordre de 20 à 80 µm.

3. Pièce moulée (10) selon l'une quelconque des revendications précédentes, le revêtement (30) comportant une première zone de revêtement (31) superficielle et une deuxième zone de revêtement (32) reliant par complémentarité de forme.

4. Pièce moulée (10) selon la revendication 3,
- la première zone de revêtement (31) contenant au moins l'une des matières polymères (34, 35) et ayant une épaisseur D1 de l'ordre de 10 à 200 µm ou de l'ordre de 10 à 60 µm ou de l'ordre de 10 à 30 µm ;
- la deuxième zone de revêtement (32) contenant au moins l'une des matières polymères (34, 35) et de la matière à mouler fibreuse (21) et ayant une épaisseur D2 de l'ordre de 10 à 200 µm ou de l'ordre de 20 à 100 µm ou de l'ordre de 20 à 50 µm.

5. Pièce moulée (10) selon l'une quelconque des revendications précédentes :
- une première matière polymère (34) de l'au moins une matière polymère (34, 35) contenant un polymère thermoplastique de matrice avec une première température de fusion ;
- une deuxième matière polymère (35) de l'au moins une matière polymère (34, 35) contenant un polymère thermoplastique de matrice avec une deuxième température de fusion ;
- la première température de fusion étant supérieure de plus de 5 °C ou de plus de 10 °C ou de plus de 20 °C ou de plus de 30 °C à la deuxième température de fusion.

6. Pièce moulée (10) selon la revendication précédente :
- le support (20) étant revêtu d'un film (40) qui comporte une première couche de film (41) constituée de la première matière polymère (34) et une deuxième couche de film (42) constituée de la deuxième matière polymère (35) ;
- la deuxième couche de film (42) faisant face au support (20).

7. Pièce moulée (10) selon l'une quelconque des revendications précédentes :
- chacune de l'au moins une matière polymère (34, 35) contenant un polymère de matrice, et le cas échéant des additifs, comme des pigments colorés et des stabilisateurs aux UV ;
- le polymère de matrice étant choisi parmi des polyoléfines, un polyester, un polypropylène, un polyamide ou des mélanges de ces derniers et la part en additifs en rapport à la matière polymère étant de 0 à 15 % en poids.

8. Pièce moulée (10) selon l'une quelconque des revendications précédentes, la matière à mouler fibreuse (21) comportant des fibres synthétiques et/ou des fibres naturelles.

9. Pièce moulée (10) selon l'une quelconque des revendications précédentes, la pièce moulée (10) comportant en supplément au moins une pièce rapportée en matière plastique et /ou en une matière métallique, qui est chaque fois reliée par complémentarité de forme avec le support.

10. Pièce moulée (10) selon l'une quelconque des revendications précédentes, la surface (33) étant de type bois/ou présentant une haptique de type bois.

11. Procédé destiné à fabriquer une pièce moulée (10), comportant les étapes :
- application d'au moins une matière polymère (34, 35) sous la forme de dispersions, de poudres, de granulés ou d'un film (40) comportant au moins une couche sur au moins une surface d'une matière à mouler fibreuse (50) ;
- compression de la matière à mouler fibreuse (50) et des matières polymères (34, 35) avec un premier outil de compression (81) tempérable, à des températures de l'ordre de 160 à 230 °C en une ébauche (90) ;
- compression (90) de l'ébauche obtenue avec un deuxième outil de compression (82) à des températures de l'ordre de 20 à 140 °C en une pièce moulée (10),
l'au moins une matière polymère (34, 35) pénétrant en partie dans la matière à mouler fibreuse (21) et la surface (33) du revêtement (30) étant gaufrée par la forme et la disposition plus ou moins aléatoire des fibres de la matière à mouler fibreuse (21) et
la surface (33) du revêtement (30) ayant au moins par régions une valeur arithmétique de rugosité moyenne Ra de l'ordre de 10 µm à 80 µm.

12. Procédé selon la revendication 11, la surface (33) étant gaufrée par la forme et la disposition de la matière à mouler fibreuse (21) et la surface (33) du revêtement (30) ayant au moins par régions une valeur arithmétique de rugosité moyenne Ra de l'ordre de 20 µm à 80 µm.

13. Procédé selon la revendication 11 ou la revendication 12, lors de la compression de l'ébauche (90), les températures se situant dans l'ordre de 160 à 220 °C ou dans l'ordre de 180 à 220 °C et lors de la compression en la pièce moulée (10), les températures de situant dans l'ordre de 80 à 120 °C ou dans l'ordre de 90 à 110 °C.

14. Procédé selon l'une quelconque des revendications 11 à 13 :
- lors de la compression en l'ébauche à partir d'au moins une des matières polymères (34, 35) une première couche de revêtement (31) superficielle étant créée qui a une épaisseur D1 de l'ordre de 10 à 200 µm ou de l'ordre de 10 à 60 µm ou de l'ordre de 10 à 30 µm ;
- lors de la compression en l'ébauche à partir d'au moins une des matières polymères (34, 35) et de la matière à mouler fibreuse (21) étant créée une deuxième zone de revêtement (32) reliant par complémentarité de forme, qui a une épaisseur D2 de l'ordre de 10 à 200 µm ou de l'ordre de 20 à 100 µm ou de l'ordre de 20 à 50 µm.

15. Procédé selon l'une quelconque des revendications 11 à 14 :
- une première matière polymère (34) contenant un polymère thermoplastique de matrice avec une première température de fusion ;
- une deuxième matière polymère (35) contenant un polymère thermoplastique de matrice avec une deuxième température de fusion ;
- la première température de fusion étant supérieure de plus de 5 °C ou de plus de 10 °C ou de plus de 20 °C ou de plus de 30 °C à la deuxième température de fusion.
